# EUROPEAN PATENT SPECIFICATION

(11) **EP 3 715 616 B1**
(45) Date of publication and mention of the grant of the patent: **09.08.2023**
(21) Application number: 18893555.5
(22) Date of filing: 25.12.2018
(51) Int. Cl.: F02M 35/10, B60K 13/02, F02B 67/00, F02M 35/16, F02M 37/00, F02M 37/04

(54) **ENGINE**
MOTOR
MOTEUR

(30) Priority: 28.12.2017 JP 2017252788
(43) Date of publication of application: 30.09.2020
(73) Proprietor: MAZDA MOTOR CORPORATION, Fuchu-cho, Aki-gun Hiroshima 730-8670 (JP)
(72) Inventor: TANISHO, Masahiko, Aki-gun, Hiroshima 730-8670 (JP); HACHIYA, Nozomu, Aki-gun, Hiroshima 730-8670 (JP); YOSHIDA, Ken, Aki-gun, Hiroshima 730-8670 (JP); FURUTANI, Masayuki, Aki-gun, Hiroshima 730-8670 (JP); NISHIOKA, Masahiro, Aki-gun, Hiroshima 730-8670 (JP); NISHIKAWA, Jun, Aki-gun, Hiroshima 730-8670 (JP)
(74) Representative: Thoma, Michael
(86) International application number: PCT/JP2018/047512
(87) International publication number: WO 2019/131604

(56) References cited:
- DE-U1-202012 000 489
- JP-A- 2004 245 147
- JP-A- 2010 285 916
- JP-A- 2012 158 994
- JP-A- 2016 102 430
- JP-A- 2017 223 185
- US-A1- 2004 149 267
- US-A1- 2006 162 699
- US-A1- 2015 337 784
- US-A1- 2017 175 688

## Description

### TECHNICAL FIELD

The present invention relates to an engine comprising an engine body and an intake passage part attached to the engine body.

### BACKGROUND ART

Conventionally, there has been an engine in which an intake device is disposed on a vehicle forward side of an engine body. For example, in an engine described in JP 2014-102431 A, an intake device including such as intake pipes, an intake manifold and an intake-air introduction pipe is disposed on a vehicle forward side of an engine body, and an oil separator is disposed between the engine body and the intake device. In this type of engine, in order for the intake device to avoid moving toward the engine body to damage the oil separator during a vehicle collision, a load transmission part formed as a protruding plate is provided on the intake device side and a load receiving member for receiving a load from the load transmission part is provided on the oil separator side to protect the oil separator.

An engine according to the preamble portion of claim 1 is known from US 2004/149267 A1. A similar engine is known from DE 20 2012 000 489 U1.

### SUMMARY OF INVENTION

### [Technical Problem]

In recent years, as more components are arranged on a vehicle forward side of an engine body, more space is required on the vehicle forward side of the engine body. On the other hand, a radiator is disposed forward of the vehicle forward-side components with a given distance therebetween, and the radiator is arranged to move over this given distance during a vehicle collision, thereby absorbing a collision load. Therefore, it is necessary to ensure the given distance between the radiator and the vehicle forward-side components. Thus, it is not possible to freely ensure a sufficiently large space on the vehicle forward side of the engine body. In this situation, due to no sufficient space for placing two members each protruding from a respective one of the intake device and the oil separator between the intake device and the engine body as in the Patent Document 1, it is difficult to protect fuel system components such as the oil separator.

It is an object of the present invention to provide an engine capable of protecting the fuel system component during a vehicle collision even in a case where a fuel system component is disposed between an engine body and an intake passage part.

### [Solution to Technical Problem]

In order to achieve the above object, according to the present invention, there is provided an engine which comprises: an engine body comprising a cylinder head and a cylinder block; an intake passage part attached to the engine body; and a fuel system component disposed between the engine body and the intake passage part, wherein the intake passage part is disposed on a vehicle forward side of the engine body when mounted to a vehicle, and wherein the intake passage part comprises a fuel system component-corresponding portion located in a zone overlapping the fuel system component when viewed from the vehicle forward side and a brittle portion located adjacent to the fuel system component-corresponding portion and having a lower rigidity than the fuel system component-corresponding portion.

In the present invention having the above feature, the intake passage part disposed on the vehicle forward side of the engine body comprises a fuel system component-corresponding portion overlapping the fuel system component when viewed from the vehicle forward side and a brittle portion formed at a position adjacent to the fuel system component-corresponding portion. Since the brittle portion has a lower rigidity than that of the fuel system component-corresponding portion, when the intake passage part receives a collision load during a collision of the vehicle, the brittle portion adjacent to the fuel system component-corresponding portion is first broken before the fuel system component-corresponding portion does, which absorbs the collision load. Thus, transmission of the collision load to the fuel system component-corresponding portion is suppressed, and a collision between the components of the intake passage part and the fuel system component is avoided. In the engine of the present invention, as the brittle portion is provided on the intake passage part itself, it is not necessary to provide a conventional load receiving member between the intake passage part and the fuel system component. Thus, even in a case where the fuel system component is disposed between the engine body and the intake passage part and there is no sufficient space ensured between the intake passage part and the fuel system component, the fuel system component is protected during a collision of the vehicle.

Preferably, in the present invention, the fuel system component-corresponding portion is provided with a number of the ribs which is greater than a number of ribs provided on the brittle portion.

According to this feature, since the fuel system component-corresponding portion is provided with at least one rib, the rigidity of the fuel system component-corresponding portion is increased. On the other hand, since the number of the ribs provided on the fuel system component-corresponding portion is greater than the number of ribs provided on the brittle portion, the fuel system component-corresponding portion has a higher rigidity than that of the brittle portion. According to the above feature, relative rigidity between the fuel system component-corresponding portion and the brittle portion can be easily adjusted by forming a rib on the fuel system component-corresponding portion or on each of the fuel system component-corresponding portion and the brittle portion and adjusting the number of the ribs.

Preferably, in the present invention, the intake passage part has a coupling portion for attaching the intake passage part to the engine body and the coupling portion is connected to a portion of the intake passage part on a side opposite to the fuel system component-corresponding portion across the brittle portion with respect to an intake air flow direction in the intake passage part.

According to this feature, the intake passage part is attached to the engine body through the coupling portion. Here, the coupling portion is connected to a portion of the intake passage part on the side opposite to the fuel system component-corresponding portion across the brittle portion with respect to an intake air flow direction in the intake passage part. Thus, when a collision load is transmitted to the intake passage part during a collision of the vehicle, the brittle portion is first broken, and, in this process, the portion of the intake passage part located on the side opposite to the fuel system component-corresponding portion is supported by the coupling portion. Since the coupling portion is attached to the engine body, the portion of the intake passage part on the side opposite to the fuel system component-corresponding portion is supported indirectly by the engine body. Therefore, it is possible to prevent the opposite portion from colliding with surrounding components.

Preferably, in the present invention, the intake passage part is provided with a valve for controlling an amount of intake air to be supplied to the engine body and the brittle portion is disposed between the fuel system component-corresponding portion and the valve.

According to this feature, since the brittle portion is disposed between the fuel system component-corresponding portion and the valve, when a collision load is transmitted during a collision of the vehicle, the brittle portion between the fuel system component-corresponding portion and the valve is first broken, and thus the connection between the fuel system component-corresponding portion and the valve is released. Thus, the transmission of the collision load to the valve is suppressed, whereby the valve is protected.

Preferably, in the present invention, the fuel system component is a fuel pipe, and the fuel pipe comprises a butting portion protruding from the fuel system component-corresponding portion toward the engine body and the butting portion is formed at a position that does not overlap the fuel pipe when viewed from forward of the vehicle.

According to this feature, since the butting portion is formed at a position that does not overlap the fuel pipe when viewed from the front of the vehicle, when the intake passage part is displaced toward the engine body during a collision of the vehicle, the butting portion contacts with the engine body to protect the fuel pipe.

Preferably, in the present invention, the fuel system component-corresponding portion has a plurality of ribs intersecting with each other, and a base end of the butting portion is provided at a position where the plurality of the ribs intersect with each other.

According to this feature, since the base end of the butting portion is provided at a position where the plurality of the ribs intersect with each other, i.e., the butting portion is formed in a portion having higher rigidity. Therefore, it is possible to prevent the butting portion from being broken at the base end thereof when the butting portion contacts with the engine body. Thus, the fuel pipe is more reliably protected.

In the present invention, the intake passage part is connected to a supercharger disposed on the vehicle forward side of the engine body through a flange, and at least one of the plurality of the ribs extends to connect the base end of the butting portion to the flange.

According to this feature, at least one of the plurality of the ribs extends to connect the base end of the butting portion to the flange. Here, the flange is a portion having a relatively high rigidity. Thus, as the at least one rib extends to connect the base end of the butting portion to the flange, the rigidity of a region of the intake passage part from the butting portion to the flange is increased. As a result, when the butting portion contacts with the engine body, an area of the intake passage member around the butting portion becomes less likely to be broken, thus the fuel pipe is more reliably protected.

A portion of the intake passage part on the side of the fuel pipe may have: a plurality of ribs provided at a position overlapping the fuel pipe when viewed from the vehicle forward side so as to provide a higher rigidity than a surrounding region, and formed to intersect with each other; and a butting portion protruding from a position where the plurality of the ribs intersect with each other toward the engine body, and wherein the butting portion is provided at a position that does not overlap the fuel pipe when viewed from the vehicle forward side.

In the present invention having the above feature, the portion of the intake passage part on the side of the fuel pipe has: a plurality of ribs provided at a position overlapping the fuel pipe when viewed from the vehicle forward side so as to provide a higher rigidity than that of a surrounding region and formed to intersect with each other; and a butting portion protruding from a position where the plurality of the ribs intersect with each other toward the engine body. Therefore, when the intake passage part moves toward the engine body during a collision of the vehicle, the butting portion contacts with the engine body to protect the fuel pipe. In this process, since the butting portion is provided protrude from the position where the plurality of the ribs intersect with each other toward the engine body, it is possible to suppress to damage the butting portion at the base end thereof when the butting portion contacts with the engine body. Thus, the fuel pipe is more reliably protected.

Further, since the butting portion is provided at the position that does not overlap the fuel pipe when viewed from the vehicle forward side, when the intake passage part moves toward the engine body during a collision of the vehicle, the butting portion contacts with the engine body to protect the fuel pipe.

Preferably, in the present invention, the intake passage part is connected to a supercharger disposed on the vehicle forward side of the vehicle body through a flange, and at least one of the plurality of the ribs extends to connect the base end of the butting portion to the flange.

According to this feature, at least one of the plurality of the ribs extends to connect the base end of the butting portion to the flange. Here, the flange is a portion having a relatively high rigidity. By arranging the at least one rib so as to extend to connect the base end of the butting portion to the flange, the rigidity at a region of the intake passage part extending from the butting portion to the flange can be increased. As a result, when the butting portion contacts with the engine body, the butting portion becomes less likely to damage a region of the intake passage member around the butting portion, thus the fuel pipe is more reliably protected.

### BRIEF DESCRIPTION OF DRAWINGS

FIG. 1 is a front view showing an intake-side portion of an engine according to one embodiment of the present invention.
FIG. 2 is a sectional front view showing the intake-side portion of the engine according to this embodiment.
FIG. 3 is a view showing a fuel pump and an engine body of the engine according to this embodiment.
FIG. 4 is a perspective view showing a state in which the fuel pump is attached to the engine body of the engine according to this embodiment.
FIG. 5 is a view showing an inlet duct and the fuel pump according to this embodiment, when viewed from the side of the engine body.
FIG. 6 is a view showing the inlet duct according to this embodiment, when viewed from the side of the engine body.
FIG. 7 is a sectional side view showing the inlet duct and the engine body according to this embodiment.
FIG. 8 is a sectional top plan view showing the inlet duct and the engine body according to this embodiment.
FIG. 9 is a view showing an inlet duct according to a modification of this embodiment, when viewed from the side of an engine body of the engine.

### DESCRIPTION OF EMBODIMENTS

With reference to the accompanying drawings, a preferred embodiment of the present invention will now be described.

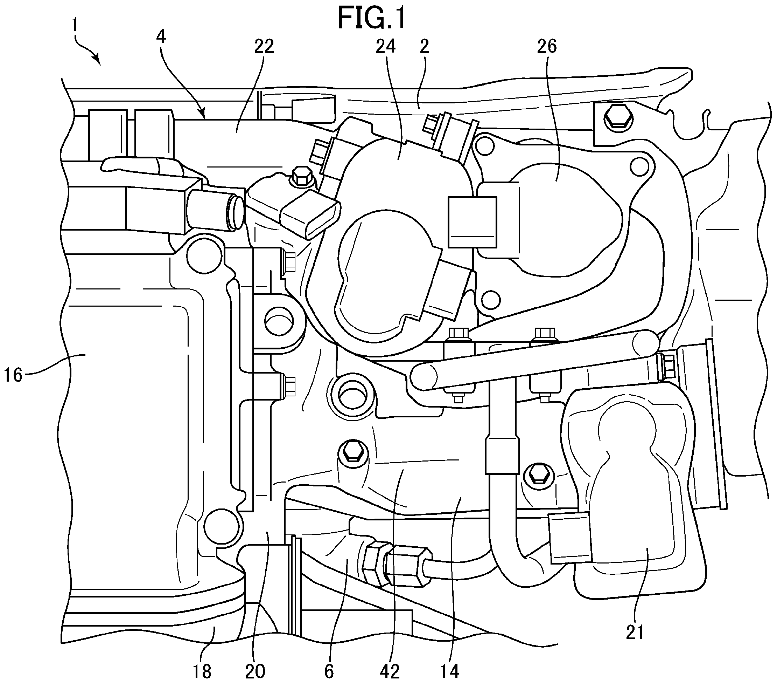

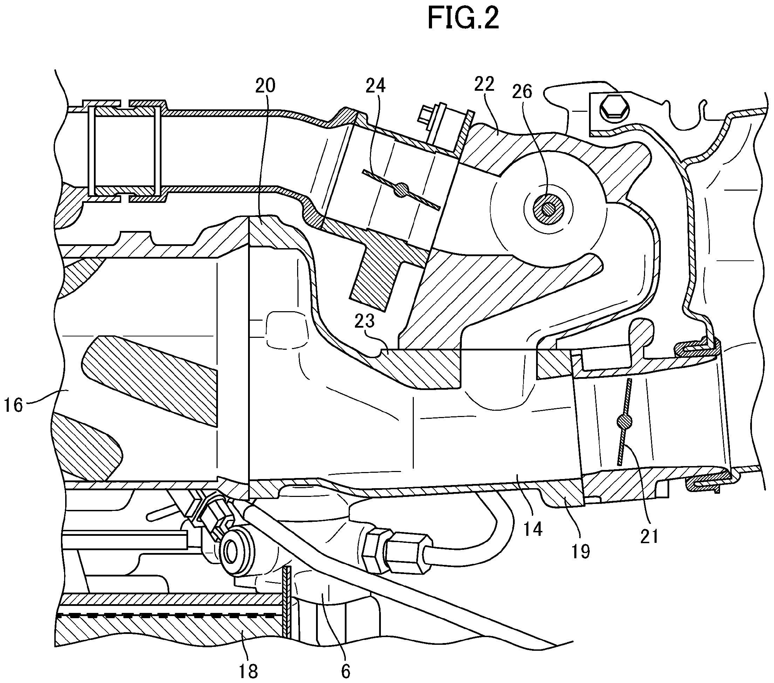

FIG. 1 is a front view showing an intake-side portion of an engine 1 according to one embodiment of the present invention, and FIG. 2 is a sectional front view showing the intake-side portion of the engine 1 according to this embodiment. FIGS. 1 and 2 show an upper right portion of the engine 1 when viewing the engine 1 from the front thereof. As shown in FIGS. 1 and 2, the engine 1 comprises an engine body 2, an intake system device 4 attached to the engine body 2, and a fuel pump 6 disposed between the engine body 2 and the intake system device 4 and configured to supply fuel to the engine body 2.

In this embodiment, in a state in which the engine 1 is mounted to a vehicle, it is disposed such that a direction of an engine output shaft (engine output shaft direction) of the engine body 2 is oriented along a width (lateral) direction of the vehicle. In FIG. 1, a rightward-leftward direction of FIG. 1 corresponds to the engine output shaft direction of the engine 1,an up-down direction of FIG. 1 corresponds to an up-down direction of the vehicle and the engine 1, and the front side of a direction orthogonal to the drawing sheet of FIG. 1 corresponds to a forward direction of the vehicle and the engine 1.

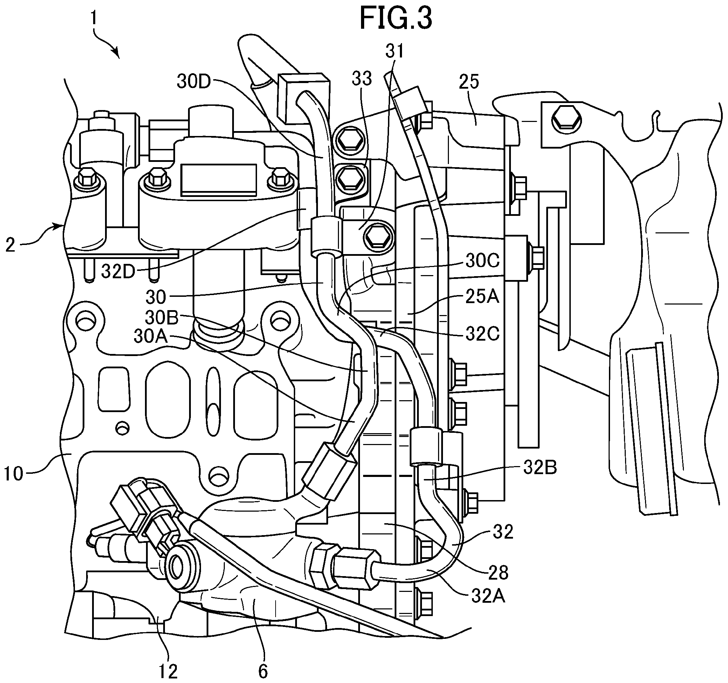

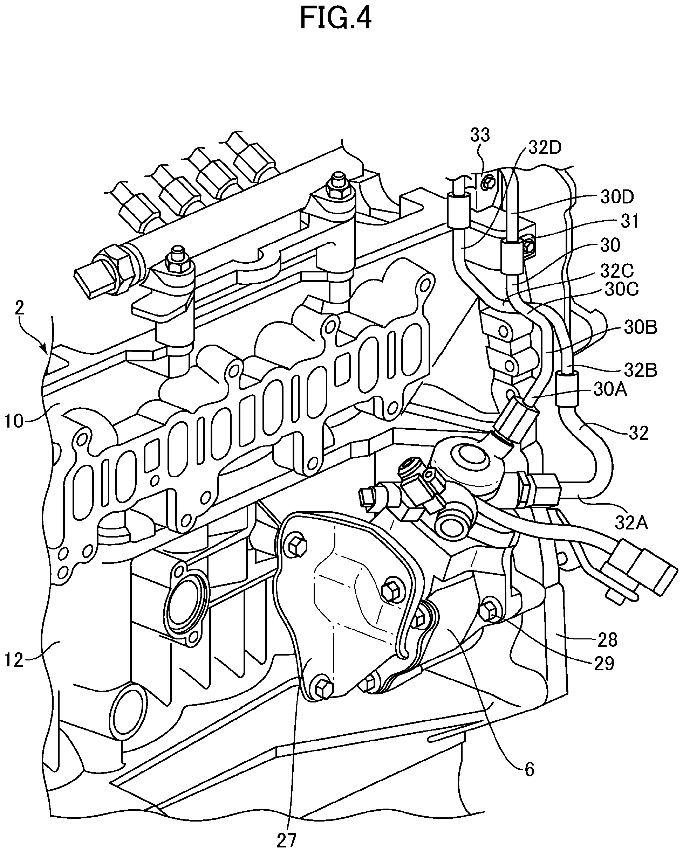

The engine body 2 comprises a cylinder head 10 and a cylinder block 12 (see FIGS. 3 and 4).

The intake system device 4 is disposed on a vehicle forward side of the engine 1, and comprises: an inlet duct 14 as a first intake passage part for introducing intake air therethrough; a supercharger 16 as a second intake passage part, coupled to the inlet duct 14 and configured to compress compress intake air; an intercooler 18 for cooling intake air discharged from the supercharger 16; and an air bypass passage 22 bifurcated from the inlet duct 14 and configured to allow intake air to be supplied directly to the engine body 2 to pass therethrough without passing through the supercharger 16.

The inlet duct 14 is formed of an aluminum alloy, and disposed such that a flow path direction thereof is oriented in a direction substantially parallel to the engine output shaft direction. The inlet duct 14 is formed such that it expands upwardly from an substantial center in a longitudinal direction toward an end (supercharger-side end) thereof coupled to the supercharger 16, and has a flange 20 at the supercharger-side end coupled to the supercharger 16. The inlet duct 14 is connected to the supercharger 16 through this flange 20. At an end (throttle valve-side end) of the inlet duct 14 opposite to the flange 20, a throttle valve 21 is attached thereto. Further, a flange 23 (FIG. 2) serving as a coupling portion to which the air bypass passage 22 is coupled is formed in an upper end portion of a peripheral surface of the substantial center in the longitudinal direction of the inlet duct 14. An end of the flange 23 is continuously connected to a flange 19 (FIG. 2) for coupling the throttle valve 21 thereto.

The supercharger 16 is disposed such that a flow path direction thereof is oriented in a direction substantially parallel to the engine output shaft direction.

The intercooler 18 is located below the supercharger 16 and coupled to the supercharger 16 via a duct extending downwardly from the supercharger 16. Further, the intercooler 18 is connected to the engine body 2 via a pipe to supply cooled intake air to the engine body 2.

As shown in FIG. 2, the air bypass passage 22 is provided downstream of the throttle valve 21 on the inlet duct 14, and coupled the flange 23 of the inlet duct 14. The air bypass passage 22 is provided with an air bypass valve 24 for opening and closing the air bypass passage 22. An EGR passage (not shown) is connected to the air bypass passage 22 at an upstream of the air bypass valve 24, and an EGR valve 26 is disposed in the EGR passage.

The air bypass passage 22 extends upwardly from the inlet duct 14, and then extends along the engine output shaft direction above the inlet duct 14 and the supercharger 16. A portion of the air bypass passage 22 extending from the inlet dust 14 to the EGR valve 26 is formed of an aluminum alloy, and the remaining portion downstream of the air bypass valve 24 is formed of metal.

The air bypass passage 22 is connected to an intake side of the engine body 2 at an end opposite to an end connected to the inlet dust 14. Thus, the inlet duct 14 is attached to the engine body 2 via the air bypass passage 22.

In this embodiment, an intake passage member of the present invention comprises an intake passage of the inlet duct 14, an intake passage of the air bypass passage 22, an intake passage of the supercharger 16, and an intake passage of the intercooler 18.

A radiator (not shown) for to cooling a cooling medium of the intercooler 18 is provided on the vehicle forward side with respect to the intake system device 4. A space is formed between the radiator and a front end of the intake system device 4 at a given distance, and no component is disposed in this space.

As shown in FIGS. 1 and 2, the fuel pump 6 is located forward of the engine body 2 and rearward of the inlet duct 14 and the intercooler 18. That is, the fuel pump 6 is disposed between the engine body 2 and the intake system device 4.

FIG. 3 is a view showing the fuel pump 6 and the engine body 2 of the engine 1 according to this embodiment, and FIG. 4 is a perspective view showing a state in which the fuel pump 6 is attached to the engine body 2 of the engine 1 according to this embodiment. FIGS. 3 and 4 show a state with the intake system device 4 removed. As shown in FIGS. 3 and 4, the cylinder head 10 and the cylinder block 12 of the engine body 2 have an engine body-side flange 28 formed at one end in the engine output shaft-direction of the engine body 2 (in FIG. 3, a right end) and protruding in a vehicle forward direction (toward the front side with respect to the drawing sheet of FIG. 3). A cover 25 (FIG. 3) for covering a timing chain system of the engine 1 provided on an end surface of the cylinder block 12 on the side of the one end in the engine output shaft-direction is attached to the engine body-side flange 28.

The fuel pump 6 is fixed to the boss extending in the engine output shaft-direction by a bolt 29 (FIG. 4) on a lateral face on the cylinder block 12 side and the side of the other end in the engine output shaft direction of the engine body-side flange 28. Further, a bracket 27 is attached to a lateral surface of the fuel pump 6 facing the second engine output shaft-directional end, and fixed to the cylinder block 12. That is, the fuel pump 6 is attached to the cylinder block 12 by the bolt 29 and the bracket 27.

A first fuel pipe 30 for allowing fuel supplied from a not-shown fuel tank to pass therethrough and a second fuel pipe 32 for allowing fuel pumped from the fuel pump 6 to the engine body 2 to pass therethrough are connected to the fuel pump 6. Each of the first and second fuel pipes 30, 32 extends upwardly along a side surface of the cylinder bock 12. More specifically, the first fuel pipe 30 is connected to an upper end of the fuel pump 6 and at the side of the one end in the engine output shaft-direction, and has: a first portion 30A extending obliquely upwardly toward the engine body-side flange 28 to forward of the engine body-side flange 28 of the cylinder head 10; a second portion 30B extending upwardly from the first portion 30A along a front face of the engine body-side flange 28; a third portion 30C extending obliquely upwardly from the second portion 30B toward the other end in the engine output shaft-direction again and in a direction approaching the cylinder head 10; and a fourth portion 30D extending upwardly from the third portion 30C on the other end in the engine output shaft-direction of the engine body-side flange 28 and up to a position above the engine body 2. The fourth portion 30D is fixed to the front face of the engine body-side flange 28 through a bracket 31, whereby the first fuel pipe 30 is fixed to the engine body 2.

On the other hand, the second fuel pipe 32 is connected to a lateral surface of an upper portion of the fuel pump 6 at one end in the engine output shaft-direction, and has: a first portion 32A passing across the front face of the engine body-side flange 28 and extending to a position protruding toward the one end from an end face on the side of the one end in the engine output shaft-direction of the engine body-side flange 28; a second portion 32B curving in a direction approaching the cylinder head 10 and returning toward the other end in the engine output shaft-direction and then extending upwardly from a position on the side of the one end in the engine output shaft-direction with respect to the engine body-side flange 28, more specifically, a position forward of a flange 25A of the cover 25 of the timing chain system; a third portion 32C passing across a region forward of the engine body-side flange 28 again and extending toward the other end in the engine output shaft-direction to a position rearward of the third portion 30C of the first fuel pipe 30, i.e., a position closer to the engine body 2; and a fourth portion 32D extending upwardly on the side of the other end in the engine output shaft-direction of the engine body-side flange 28 at a position rearward of the first fuel pipe 30 and up to a position above the engine body 2. The fourth portion 32D is fixed to a mounting of an upper surface of the cylinder head 10 through a bracket 33, whereby the second fuel pipe 32 is fixed to the engine body 2.

A fuel system component of the present invention comprises the fuel pump 6 and the first and second fuel pipe 30, 32, and a fuel system component pf the present invention is disposed adjacent to the engine body-side flange 28 in this embodiment.

A positional relationship between the inlet duct 14 of the intake system device 4 and the fuel pump 6 of the fuel system component in the engine 1 configured as above will be described.

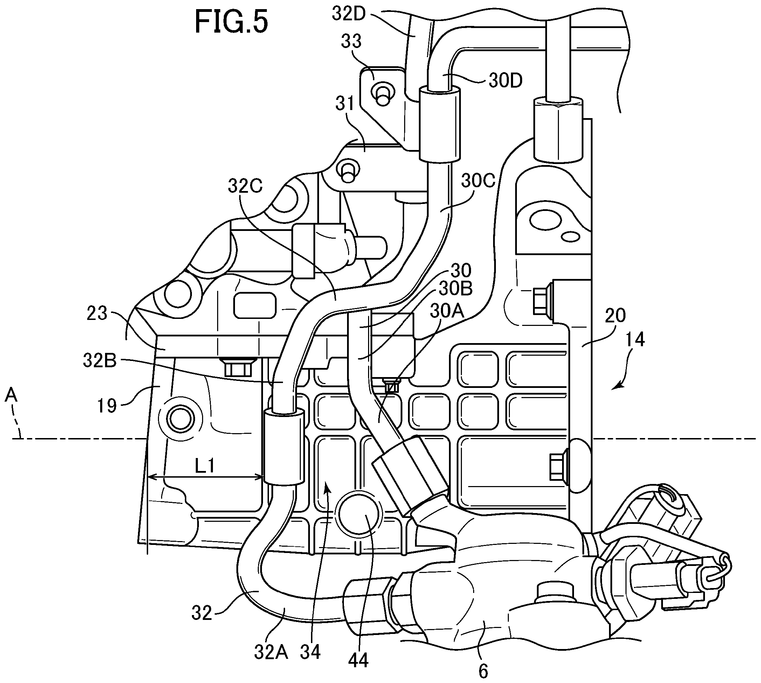

FIG. 5 is a view showing the inlet duct 14 and the fuel pump 6 according to this embodiment, when viewed from the side of the engine body 2. As shown in FIG. 5, the inlet duct 14 is disposed forward of the fuel pump 6, and they are arranged in an up-and-down positional relationship such that the upper portion of the fuel pump 6 is located at a lower end of the inlet duct 14. Further, the inlet duct 14 and the fuel pump 6 are arranged in a lateral positional relationship such that the upper portion of the fuel pump 6 is located on the side of the other end in the engine output shaft-direction and in the vicinity of the flange 20.

The first fuel pipe 30 is disposed such that the first portion 30A extends from below to above the inlet duct 14 at a position rearward of and at a substantial center of the inlet duct 14 in the engine output shaft-direction. Further, the second fuel pipe 32 is disposed such that the second portion 32B extends from below to above the inlet duct 14 at a position rearward of the inlet duct 14 and close to the other end in the engine output shaft-direction, i.e., at a position by a given distance L1 from the one end in the engine output shaft-direction.

As stated above, when viewing the engine 1 from forward of the vehicle, the inlet duct 14 has, in a peripheral face thereof on the side of the engine body 2, a fuel system component-corresponding portion 34 facing a position overlapping the upper portion of the fuel pump 6, the first fuel pipe 30 and the second fuel pipe 32.

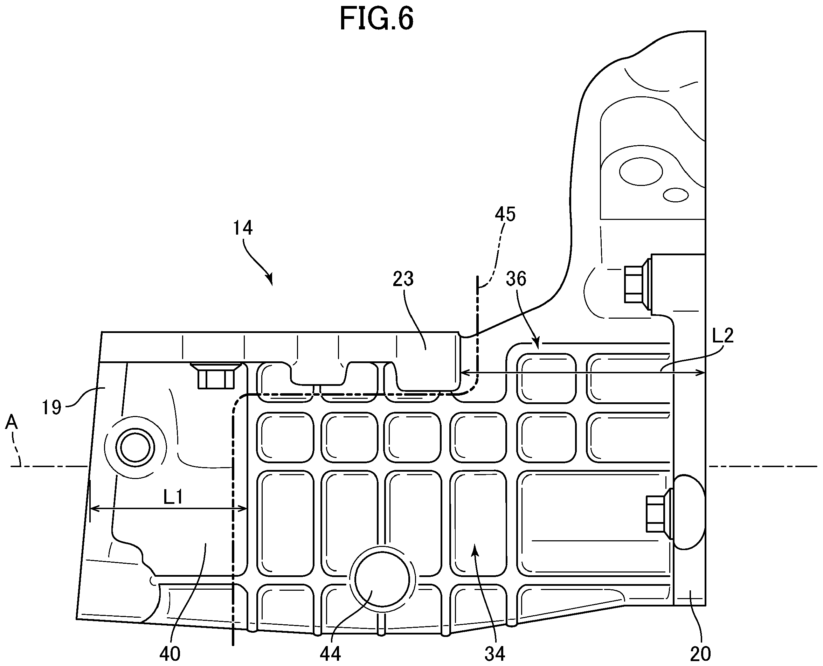

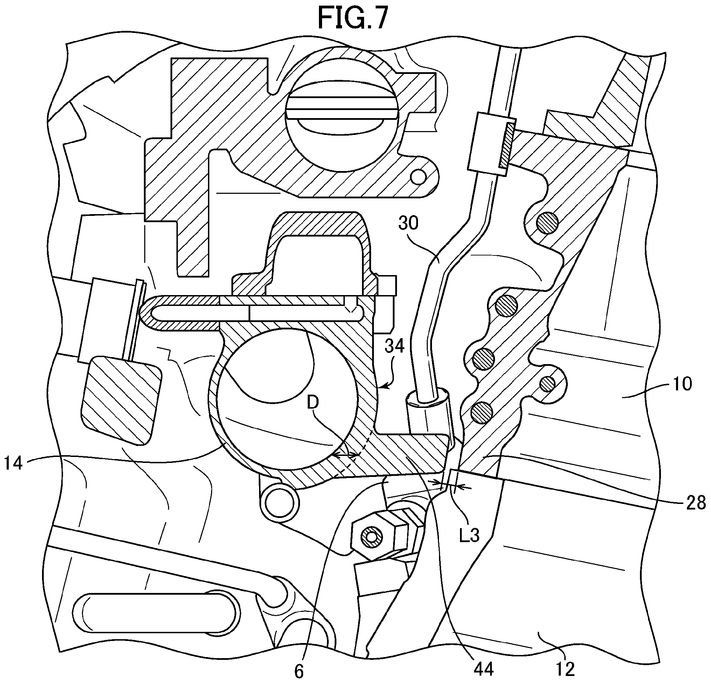

FIG. 6 is a view showing the inlet duct 14 according to this embodiment, when viewed from the side of the engine body 2, and FIG. 7 is a sectional side view showing the inlet duct 14 and the engine body 2 according to this embodiment. As shown in FIG. 6, the fuel system component-corresponding portion 34 is formed with a plurality of ribs 36. The ribs 36 extend along a direction of a central axis A (longitudinal direction) of the inlet duct 14, and in a direction orthogonal to the longitudinal direction, at regular intervals, so as to form a lattice shape in their entirety. Further, as shown in FIG. 7, the inlet duct 14 is formed such that the fuel system component-corresponding portion 34 has a wall thickness greater than that of the remaining peripheral surface.

In a range from the position at the given distance L1 from the one end in the engine output shaft-direction to a position at by a given distance L2 from the other end in the engine output shaft-direction, the ribs 36 are formed over a range from the flange 23 to which the air bypass passage 22 is joined to a lower end of the peripheral surface of the inlet duct 14. Further, in a range from the other end in the engine output shaft-direction to the position at the given distance L2 therefrom, the inlet duct 14 is formed to expand upwardly, so that the ribs 36 are formed over a range from a position above the flange 23 for the air bypass passage 22 to the lower end of the peripheral surface of the inlet duct 14.

On the other hand, in a range from the one end in the engine output shaft-direction to the position at the given distance L1 therefrom, there is a region 40 in which the ribs 36 are not formed. The region 40 is disposed between the throttle valve 21 attached to the end of the inlet duct 14 and the fuel system component-corresponding portion 34 of the inlet duct 14. Further, the flange 23 for the air bypass passage 22 is connected to the flange 19 for the throttle valve 21. Thus, the flange 23 is connected to the flange 19 which is a portion located on the side opposite to the fuel system component-corresponding portion 34 across the region 40 with respect of an intake air flow direction.

Further, the peripheral surface of the inlet duct 14 on the forward side thereof is formed as a region 42 (FIG. 1) in which the ribs 36 are not formed over its entire longitudinal length.

These regions 40, 42 are provided on the inlet duct 14 adjacent to the fuel system component-corresponding portion 34 to function as a brittle portion having a lower rigidity than that of the fuel system component-corresponding portion 34.

The fuel system component-corresponding portion 34 of the inlet duct 14 is formed with a butting portion 44 protruding from an outer surface of the inlet duct 14 toward the engine body 2.

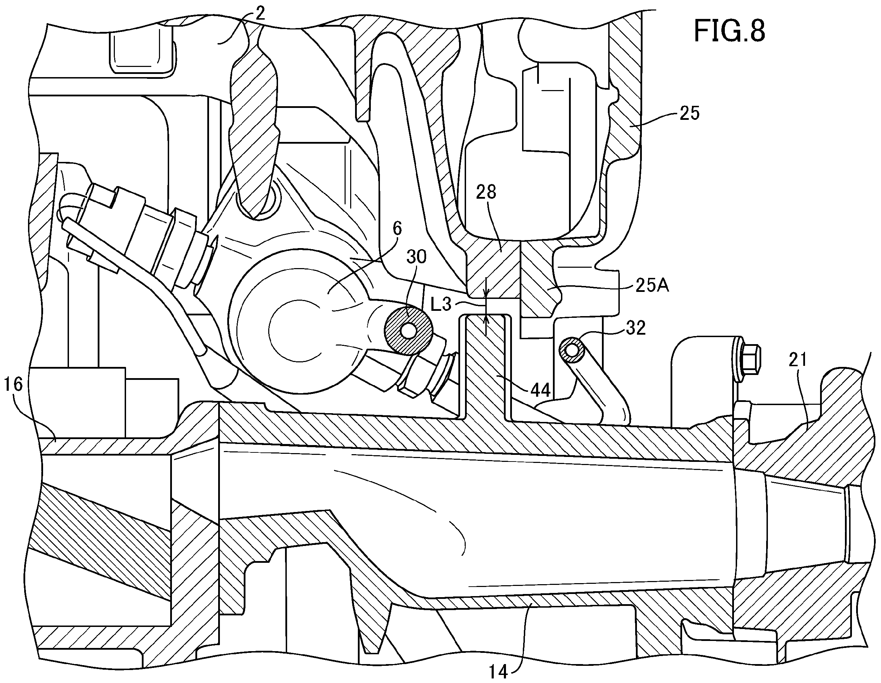

FIG. 8 is a sectional top plan view showing the inlet duct 14 and the engine body 2 according to this embodiment. As shown in FIGS. 6 to 8, the butting portion 44 is located at a positon offset downwardly from the central axis A of the inlet duct 14 and in the vicinity of the lower end of the peripheral of the inlet duct 14, and extends substantially horizontally toward the engine body 2. Thus, in an area provided with the butting portion 44, a wall thickness D in a direction along which the butting portion 44 of the inlet duct 14 extends becomes greater than a wall thickness in a radial direction of the inlet duct 14.

Further, a base end of the butting portion 44 is connected onto at least one of the ribs 36, more specifically at a position where two or more of the ribs 36 intersect with each other. Thus, although the regions 40, 42 are disposed adjacent to the base end of the butting portion 44, the rigidity thereof becomes lower than that of the base end. Further, at least one of the two or more ribs 36 to which the base end of the butting portion 44 is connected extends from the base end of the butting portion 44 to the flange 20 along the longitudinal direction (direction of the central axis A).

As shown in FIGS. 5 and 8, the butting portion 44 protrudes toward the engine body 2 between the first fuel pipe 30 and the second fuel pipe 32 of the fuel pump 6, and is disposed facing to the front surface of the engine body-side flange 28 of the engine body 2. A space having a given distance L3 is defined between the butting portion 44 and the front surface of the engine body-side flange 28. Thus, when the inlet duct 14 is displaced toward the engine body, the butting portion 44 is able to contact with the engine body-side flange 28 of the engine body 2.

Here, the given distance L3 is set to be less than each of a distance from the outer surface of the inlet duct 14 to an outer periphery of the fuel pump 6, a distance from the outer surface of the inlet duct 14 to the first fuel pipe 30 and a distance from the outer surface of the inlet duct 14 to the second fuel pipe 32.

The engine 1 according to this embodiment configured as above operates as follows.

Upon a frontal collision of the vehicle, a collision load causes the radiator to be displaced toward the rear side of the vehicle. A space having a given distance is formed between the radiator and the intake system device 4 and no component is disposed in this space. Thus, while the radiator is displaced to absorb the collision load, other components of the engine 1 are not damaged. However, in a case where the radiator is displaced beyond the given distance between the radiator and the intake system device 4, the radiator is brought into contact with the intake system device 4.

When the radiator reaches the intake system device 4 and the collision load is input to the inlet duct 14, the regions 40, 42 as the brittle portion of the inlet duct 14 are broken, thereby absorbing the collision load. Further, depending on the magnitude of the collision load, an area between the flange 23 and the ribs 36 of the inlet duct 14 is also broken. On the other hand, as the fuel system component-corresponding portion 34 is formed with the ribs 36, it has a higher rigidity than that of the regions 40, 42, and therefore, it is prevented from breaking. As stated above, the inlet duct 14 is broken along a position as indicated by the dashed-two dotted line 45 in FIG. 6.

At this stage since the ribs 36 of the fuel system component-corresponding portion 34 extend to the flange 20, the fuel system component-corresponding portion 34 is in a connected state with respect to the flange 20. On the other hand, since the flange 23 is connected to the flange 19 for coupling with the throttle valve 21, the flange 19 is in a connected state with respect to the throttle valve 21, and the flange 23 is in a connected state with respect to the air bypass passage 22. Since the air bypass passage 22 is coupled to the engine body 2, the throttle valve 21 is supported by the engine body 2 via the air bypass passage 22. Therefore, when the regions 40, 42 are broken, the coupling between the throttle valve 21 and the air bypass passage 22, and the fuel system component-corresponding portion 34 and the supercharger 16 is released. Thus, a further collision load is not input to the throttle valve 21 and the air bypass passage 22.

Further, when the inlet duct 14 is displaced toward the engine body 2, the butting portion 44 protruding from the fuel system component-corresponding portion 34 contacts with the engine body-side flange 28 to prevent a further displacement of the inlet duct 14. Here, the distance L3 between the distal end of the butting portion 44 and the engine body-side flange 28 is set to be less than each of the distance from the outer surface of the inlet duct 14 to the outer periphery of the fuel pump 6, the distance from the outer surface of the inlet duct 14 to the first fuel pipe 30, and the distance from the outer surface of the inlet duct 14 to the second fuel pipe 32. Thus, the butting portion 44 contacts with the engine body-side flange 28 before the inlet duct 14 reaches the fuel pump 6, the first fuel pipe 30, or the second fuel pipe 32.

In the above manner, the collision load is absorbed, and damage to the fuel system components such as the fuel pump 6, the first fuel pipe 30 and the second fuel pipe 32 is avoided.

The engine 1 according to this embodiment configured as above can obtain the following excellent advantageous effects.

Since the fuel system component-corresponding portion 34 is provided with the ribs 36, whereas the regions 40, 42 are provided with no rib, the regions 40, 42 serve as a brittle portion having a lower rigidity than that of the fuel system component-corresponding portion 34. Thus, when a collision load during a collision of the vehicle is input to the inlet duct 14, the regions 40, 42 are broken before the fuel system component-corresponding portion 34 to absorb the collision load. This makes it possible to prevent transmission of the collision load to the fuel system component-corresponding portion 34. In addition, as it prevents breaking of the fuel system component-corresponding portion 34, it protects the fuel system components such as the fuel pump 6 and the first and second fuel pipes 30, 32.

Further, protection of the fuel system components can be achieved by providing the ribs 36 onto the fuel system component-corresponding portion 34 of the inlet duct 14. Thus, even in a case where there is no sufficient space ensured between the intake passage member and the fuel system components, it becomes possible to reliably protect the fuel system components during a collision of the vehicle.

As above, the ribs 36 are provided onto the fuel system component-corresponding portion 34, and no rib is provided onto the regions 40, 42 to form the regions 40, 42 as the brittle portion. Thus, the rigidity of the fuel system component-corresponding portion 34 can be easily adjusted by adjusting the number, shape, layout, etc., of ribs to be formed.

In the inlet duct 14, the flange 23 for coupling with the air bypass passage 22 is connected to the flange 19 for coupling with the throttle valve 21. Thus, when the regions 40, 42 are broken by a collision load during a collision of the vehicle, the throttle valve 21 is connected and supported to the air bypass passage 22 via the flange 19 of the inlet duct 14. Therefore, even in a situation where the regions 40, 42 are broken and the coupling between the throttle value 21 and the inlet duct 14 is released, it becomes possible to prevent a problems such as the throttle value 21 loses support and collides with surrounding components.

The regions 40, 42 are disposed between the throttle valve 21 and the fuel system component-corresponding portion 34. Thus, when a collision load is input to the inlet duct 14, the regions 40, 42 are broken and the coupling between the inlet duct 14 and the throttle valve 21 is released. This makes it possible to prevent the collision load input to the inlet duct 14 from being transmitted to the throttle valve 21, thereby preventing damage to the throttle valve 21.

Since the butting portion 44 protrudes toward the engine body 2 between the first fuel pipe 30 and the second fuel pipe 32, it is formed at a position that does not overlap the first fuel pipe 30 and the second fuel pipe 32 when viewed from forward of the vehicle. Thus, when the inlet duct 14 is displaced toward the engine body 2 during a collision of the vehicle, the butting portion 44 contacts with the engine body 2 before the inlet duct 14 contacts with the engine body 2 or the first and second fuel pipes 30, 32. This makes it possible to protect the first and second fuel pipes 30, 32.

Since the base end of the butting portion 44 is provided at a position where the ribs 36 intersect with each other, the butting portion 44 is formed in a portion having a higher rigidity. Therefore, damage of the butting portion 44 at the base end thereof is suppressed when the butting portion 44 contacts with the engine body 2. This makes it possible to more reliably protect the first and second fuel pipes 30, 32.

At least one of the plurality of the ribs 36 extends so as to connect the base end of the butting portion 44 and the flange 20 together. Here, the flange 20 is a portion having a relatively high rigidity. Thus, the at least one rib 36 extending to connect the base end of the butting portion 44 to the flange 20,the rigidity of a portion of the inlet duct 14 from the butting portion 44 to the flange 20 can be increased. As a result, when the butting portion 44 contacts. with the engine body 2, an area of the inlet duct 14 around the butting portion 44 becomes less likely to be broken, so that it becomes possible to more reliably protect the first and second fuel pipes 30, 32.

It should be noted that the present invention is not limited to the above embodiment, but various changes and modifications may be made therein, for example, in the following manner.

Regarding a brittle portion formation method, in the above embodiment, the regions 40, 42 are formed as the brittle portion by providing the ribs 36 onto the fuel system component-corresponding portion 34 and providing no rib onto the regions 40, 42. However, a rib may be formed for example on both of the fuel system component-corresponding portion and a region adjacent to the fuel system component-corresponding portion, and the number of ribs on the fuel system component-corresponding portion may be set to be greater than the number of ribs on the region adjacent to the fuel system component-corresponding portion. In essence, as the brittle portion formation method may comprise forming at least one rib on the fuel system component-corresponding portion, and setting the number of ribs on the fuel system component-corresponding portion to be greater than the number of ribs on the brittle portion. Alternatively, as the brittle portion formation method, any other suitable formation method or structure may be employed, for example, a method or structure in which an interval between adjacent ones of a plurality of ribs formed on the fuel system component-corresponding portion is set to become less than an interval between adjacent ones of a plurality of ribs formed on the adjacent region, or in which a wall thickness of the fuel system component-corresponding portion is set to become greater than a wall thickness of the adjacent region.

The position, layout, range, etc., of the brittle portion may be appropriately changed depending on layout of the intake passage part with respect to the engine body, or with respect to the fuel system components. The brittle portion may not be necessarily provided, between a valve such as the throttle valve, and the intake passage part such as the inlet duct.

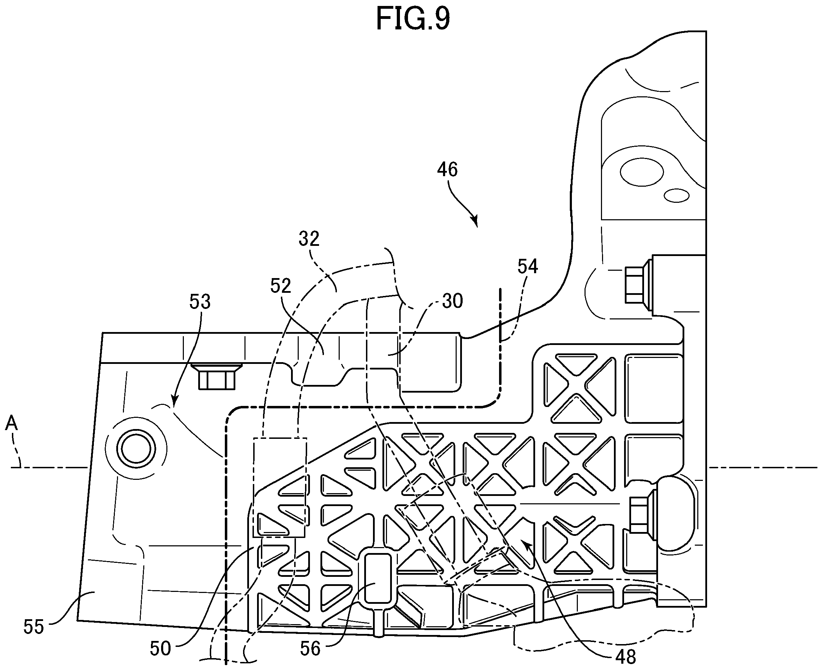

The shape and layout of the ribs formed on the fuel system component-corresponding portion is not limited to those in the above embodiment. FIG. 9 is a view showing an inlet duct 46 according to a modification of this embodiment, not part of the invention, when viewed from the side of an engine body of the engine. As shown in FIG. 9, although a fuel system component-corresponding portion 48 of the inlet duct 46 has ribs 50, the ribs 50 are formed as a truss-like structure in which the ribs 50 are arranged in a lattice pattern and additionally arranged diagonally in each lattice space. Further, the ribs 50 are not connected to the flange 52 but formed from below a flange 52 for the air bypass passage 22. Thus, a brittle portion 53 is formed in an outer peripheral region around a portion with the ribs 50, more specifically, above the portion with the ribs 50 and on the side of a flange 55 for a throttle valve of the portion with the ribs 50.

Even with the ribs 50 configured as above, when a collision load is input during a vehicle collision, the inlet duct 46 is broken along a position as indicated by the dashed-two dotted lime 54, as with the inlet duct 14 in the aforementioned embodiment. With such ribs 50 configured as above, the ribs 50 are not connected to the flange 52 (not part of the invention). Thus, even when the input load to the brittle portion is relatively large, a stress is less likely to act on the fuel system component-corresponding portion, when the inlet duct 46 is broken along the position of the dashed-two dotted line 54.

In the above manner, the shape and layout of the ribs may be arbitrarily set.

Further, the butting portion is not limited to a circular columnar shape, but may have a polygonal columnar shape such as a rectangular columnar shape as shown in for example a butting portion 56 in FIG. 9. The shape of the butting portion may be arbitrarily set.

In the above embodiment, the flange 23 for the air bypass passage 22 is connected to the flange 19 for the throttle valve 21. However, in the present invention, a coupling portion for attaching the intake passage part to the engine body is not necessarily connected to a portion of the intake passage part located on the side opposite to the fuel system component-corresponding portion across the brittle portion, in terms of the intake air flow direction in the intake passage member.

In the above embodiment, the brittle portion is provided between the throttle valve 21 and the fuel system component-corresponding portion 34 of the inlet duct 14. However, the valve may be any other valve for controlling an amount of intake air to be supplied to the engine body, such as the EGR valve or the air bypass valve.

In the above embodiment, the fuel system component-corresponding portion is a surface of the inlet duct 14 facing to the engine body 2. However, the fuel system component-corresponding portion may be set in any other intake passage part, such as the intake passage of the air bypass passage or the supercharger.

### LIST OF REFERENCE SIGNS

1: engine
2: engine body
4: intake system device
6: fuel pump
10: cylinder head
12: cylinder block
14: inlet duct
16: supercharger
19: flange (opposite portion)
21: throttle valve (valve)
22: air bypass passage
23: flange (coupling portion)
34: fuel system component-corresponding portion
36: rib
40, 42: region (brittle portion)
44: butting portion

## Claims

1. An engine comprising:
an engine body (2) comprising a cylinder head (10) and a cylinder block (12);
an intake passage part attached to the engine body (2); and
a fuel system component (6, 30, 32) disposed between the engine body (2) and the intake passage part,
wherein the intake passage part is disposed on a vehicle forward side of the engine body (2) when mounted to a vehicle, and wherein the intake passage part comprises: a fuel system component-corresponding portion (34) located in a zone overlapping the fuel system component (6, 30, 32) when viewed from the vehicle forward side and a brittle portion (40, 42) located adjacent to the fuel system component-corresponding portion (34) and having a lower rigidity than the fuel system component-corresponding portion (34), **characterized in that** the intake passage part is connected to a supercharger (16) disposed on the vehicle forward side of the vehicle body through a flange (23) and at least one of a plurality of ribs (36) of said fuel system component-corresponding portion (34) extends to connect the base end of a butting portion (44) of a fuel pipe of said fuel system component (30, 32) to the flange (23).

2. The engine as recited in claim 1 wherein the fuel system component-corresponding portion (34) is provided with a number of ribs (36) which is greater than a number of ribs (36) provided on the brittle portion (40, 42).

3. The engine as recited in claim 1 or 2 wherein the intake passage part has a coupling portion (23) for attaching the intake passage part to the engine body (2) and the coupling portion is connected to a portion of the intake passage part on a side opposite to the fuel system component-corresponding portion (34) across the brittle portion (40, 42) with respect to an intake air flow direction in the intake passage part.

4. The engine as recited in any one of claims 1 to 3 wherein the intake passage part is provided with a valve (21) for controlling an amount of intake air to be supplied to the engine body (2) and the brittle portion (40, 42) is disposed between the fuel system component-corresponding portion (34) and the valve (21).

5. The engine as recited in claim 1, wherein the butting portion (44) is protruding from the fuel system component-corresponding portion (34) toward the engine body (2) and the butting portion (44) is formed at a position that does not overlap the fuel pipe when viewed from forward of the vehicle.

6. The engine as recited in claim 5, wherein said base end of the butting portion (44) is provided at a position where the plurality of the ribs (36) intersect with each other.

7. The engine recited in any one of the preceding claims, wherein the intake passage part comprises an inlet duct extending substantially parallel in the engine output shaft direction, wherein the inlet duct comprises a first flange provided at one end of the inlet duct for connecting to another component of the intake passage part, a second flange (19) provided at the other end of the inlet duct (14) for connecting to a valve (21) for controlling an amount of intake air to be supplied to the engine body (2) and a third flange (23) provided on an upper end of a peripheral surface of the inlet duct for connecting to further another component of the intake passage part, and wherein the third flange is connected to the second flange.

## Patentansprüche

1. Motor, aufweisend:
ein Motorgehäuse (2), aufweisend einen Zylinderkopf (10) und einen Zylinderblock (12);
ein Einlassdurchgangsteil, das an dem Motorkörper (2) angebracht ist; und
eine Kraftstoffsystemkomponente (6, 30, 32), die zwischen dem Motorkörper (2) und dem Einlassdurchgangsteil angeordnet ist,
wobei das Einlassdurchgangsteil auf einer Fahrzeugvorderseite des Motorkörpers (2) angeordnet ist, wenn es an einem Fahrzeug montiert ist, und wobei das Einlassdurchgangsteil aufweist: einen der Kraftstoffsystemkomponente entsprechenden Abschnitt (34), der sich in einer Zone befindet, die bei Betrachtung von der Fahrzeugvorderseite die Kraftstoffsystemkomponente (6, 30, 32) überschneidet, und einen zerbrechlichen Abschnitt (40, 42), der sich benachbart zu dem der Kraftstoffsystemkomponente entsprechenden Abschnitt (34) befindet und eine geringere Steifigkeit als der der Kraftstoffsystemkomponente entsprechende Abschnitt (34) aufweist, **dadurch gekennzeichnet, dass** der Einlassdurchgangsteil über einen Flansch (23) mit einem auf der Fahrzeugvorderseite der Fahrzeugkarosserie angeordneten Ladekompressor (16) verbunden ist und sich mindestens eine einer Vielzahl von Rippen (36) des der Komponentensystemkomponente entsprechenden Abschnitts (34) erstreckt, um das Basisende eines Anlageabschnitts (44) eines Kraftstoffrohrs der Kraftstoffsystemkomponente (30, 32) mit dem Flansch (23) zu verbinden.

2. Motor nach Anspruch 1, wobei der der Kraftstoffsystemkomponente entsprechende Abschnitt (34) mit einer Anzahl von Rippen (36) versehen ist, die größer ist als eine Anzahl von Rippen (36), die an dem zerbrechlichen Abschnitt (40, 42) bereitgestellt sind.

3. Motor nach Anspruch 1 oder 2, wobei das Einlassdurchgangsteil einen Kopplungsabschnitt (23) zum Anbringen des Einlassdurchgangsteils an dem Motorkörper (2) aufweist und der Kopplungsabschnitt mit einem Abschnitt des Einlassdurchgangsteils auf einer Seite gegenüber dem der Kraftstoffsystemkomponente entsprechenden Abschnitt (34) über den zerbrechlichen Abschnitt (40, 42) in Bezug auf eine Einlassluftströmungsrichtung in dem Einlassdurchgangsteil verbunden ist.

4. Motor nach einem der Ansprüche 1 bis 3, wobei das Einlassdurchgangsteil mit einem Ventil (21) zum Steuern einer dem Motorkörper (2) zuzuführenden Menge an Einlassluft versehen ist und der zerbrechliche Abschnitt (40, 42) zwischen dem der Kraftstoffsystemkomponente entsprechenden Abschnitt (34) und dem Ventil (21) angeordnet ist.

5. Motor nach Anspruch 1, wobei der Anlageabschnitt (44) von dem der Kraftstoffsystemkomponente entsprechenden Abschnitt (34) in Richtung des Motorkörpers (2) vorsteht und der Anlageabschnitt (44) an einer Position ausgebildet ist, die bei Betrachtung von der Vorderseite des Fahrzeugs die Kraftstoffleitung nicht überschneidet.

6. Motor nach Anspruch 5, wobei das Basisende des Anlageabschnitts (44) an einer Position bereitgestellt ist, an der die Vielzahl der Rippen (36) einander überkreuzen.

7. Motor nach einem der vorhergehenden Ansprüche, wobei das Einlassdurchgangsteil einen Einlasskanal aufweist, der sich im Wesentlichen parallel in der Motorausgangswellenrichtung erstreckt, wobei der Einlasskanal einen ersten Flansch, der an einem Ende des Einlasskanals bereitgestellt ist, um mit einer anderen Komponente des Einlassdurchgangsteils zu verbinden, einen zweiten Flansch (19), der an dem anderen Ende des Einlasskanals (14) bereitgestellt ist, um mit einem Ventil (21) zu verbinden, um eine dem Motorkörper (2) zuzuführende Menge an Einlassluft zu steuern, und einen dritten Flansch (23), der an einem oberen Ende einer Umfangsfläche des Einlasskanals bereitgestellt ist, um mit einer weiteren Komponente des Einlassdurchgangsteils zu verbinden, aufweist und wobei der dritte Flansch mit dem zweiten Flansch verbunden ist.

## Revendications

1. Moteur comprenant :
un corps de moteur (2) comprenant une culasse (10) et un bloc-cylindres (12) ;
une section de passage d'admission fixée au corps de moteur (2) ; et
un composant de système de carburant (6, 30, 32) disposé entre le corps de moteur (2) et la section de passage d'admission,
dans lequel la section de passage d'admission est disposée sur un côté avant de véhicule du corps de moteur (2) lorsqu'elle est montée sur un véhicule, et dans lequel la section de passage d'admission comprend : une partie correspondant au composant de système de carburant (34) située dans une zone chevauchant le composant de système de carburant (6, 30, 32) quand elle est vue depuis le côté avant de véhicule et une partie fragile (40, 42) située de manière adjacente à la partie correspondant au composant de système de carburant (34) et présentant une rigidité inférieure à celle de la partie correspondant au composant de système de carburant (34), **caractérisé en ce que** la section de passage d'admission est reliée à un compresseur de suralimentation (16) disposé sur le côté avant de véhicule du corps de véhicule par l'intermédiaire d'un flasque (23) et au moins une nervure d'une pluralité de nervures (36) de ladite partie correspondant au composant de système de composant (34) s'étend pour relier l'extrémité de base d'une partie de butée (44) d'un tuyau de carburant dudit composant de système de carburant (30, 32) au flasque (23).

2. Moteur selon la revendication 1, dans lequel la partie correspondant au composant de système de carburant (34) est fournie avec un certain nombre de nervures (36) qui est supérieur à un certain nombre de nervures (36) fournies sur la partie fragile (40, 42).

3. Moteur selon la revendication 1 ou 2, dans lequel la section de passage d'admission présente une partie de couplage (23) destinée à fixer la section de passage d'admission au corps de moteur (2) et la partie de couplage est reliée à une partie de la section de passage d'admission sur un côté opposé à la partie correspondant au composant de système de carburant (34) à travers la partie fragile (40, 42) par rapport à une direction de flux d'air d'admission dans la section de passage d'admission.

4. Moteur selon l'une quelconque des revendications 1 à 3, dans lequel la section de passage d'admission est fournie avec une soupape (21) destinée à commander une quantité d'air d'admission à fournir au corps de moteur (2) et la partie fragile (40, 42) est disposée entre la partie correspondant au composant de système de carburant (34) et la soupape (21).

5. Moteur selon la revendication 1, dans lequel la partie de butée (44) fait saillie de la partie correspondant au composant de système de carburant (34) en direction du corps de moteur (2) et la partie de butée (44) est formée sur une position qui ne chevauche pas le tuyau de carburant quand elle est vue depuis l'avant du véhicule.

6. Moteur selon la revendication 5, dans lequel ladite extrémité de base de la partie de butée (44) est fournie sur une position où la pluralité de nervures (36) s'entrecroisent les unes les autres.

7. Moteur selon l'une quelconque des revendications précédentes, dans lequel la section de passage d'admission comprend un conduit d'entrée s'étendant de manière sensiblement parallèle dans la direction d'arbre de sortie de moteur, dans lequel le conduit d'entrée comprend un premier flasque prévu sur une extrémité du conduit d'entrée, destiné à être relié à un autre composant de la section de passage d'admission, un deuxième flasque (19) prévu sur l'autre extrémité du conduit d'entrée (14) destiné à être relié à une soupape (21) pour commander une quantité d'air d'admission à fournir au corps de moteur (2) et un troisième flasque (23) prévu sur une extrémité supérieure d'une surface périphérique du conduit d'entrée, destiné à être relié à un autre composant supplémentaire de la section de passage d'admission, et dans lequel le troisième flasque est relié au deuxième flasque.
